Europäisches Patentamt

European Patent Office

Office européen des brevets

(11) Veröffentlichungsnummer: **0 263 809**
**A2**

(12) # EUROPÄISCHE PATENTANMELDUNG

(21) Anmeldenummer: 87890214.7

(22) Anmeldetag: 21.09.87

(51) Int. Cl.⁴: **A 61 C 8/00**

(30) Priorität: 22.09.86 AT 2527/86

(43) Veröffentlichungstag der Anmeldung:
13.04.88 Patentblatt 88/15

(84) Benannte Vertragsstaaten:
AT BE CH DE FR GB LI LU NL SE

(71) Anmelder: **Putz, Erich, Dr.**
**Arthur-Schnitzler-Strasse 4/9**
**A-5020 Salzburg (AT)**

(72) Erfinder: **Putz, Erich, Dr.**
**Arthur-Schnitzler-Strasse 4/9**
**A-5020 Salzburg (AT)**

(54) **Zahnmedizinisches Implantat.**

(57) Das dentale Halbimplantat besitzt als zur Verankerung im Kieferknochen dienenden Unterteil eine verschraubbare 2-gängige Wendel mit deltoidförmigem Querschnitt (1), variabler Windungszahl (2) und Ganghöhe (3). Die Konstruktion als 2-gängige Wendel ermöglicht ein der dauerhaften Verankerung dienliches allseitiges knöchernes Durchwachsen.

EP 0 263 809 A2

Bundesdruckerei Berlin

## Beschreibung

Die vorliegende Erfindung bezieht sich auf das Gebiet der Implantologie in der Zahnmedizin.

Entsprechend dem bisherigen Stand der Technik werden in der Zahnmedizin die Implantate in geschlossene und offene Implantate (= Halbimplantate) unterteilt. Beim vorliegenden Erfindungsgegenstand handelt es sich um ein Halbimplantat mit Verankerung im Knochen und in die Mundhöhle ragenden Oberteil. Die Klassifikation der Halbimplantate erfolgt in submucöse bzw. subperjostale einerseits und enossale Implantate andererseits. Das zur Beschreibung anstehende Implantat ist der Gruppe der enossalen Implantate zuzurechnen, deren Einteilung wie folgt vorgenommen werden kann:

1.) Nadel- oder Stiftimplantate

2.) Schraubenimplantate z.B.: Helikoidal-Schraube nach Heinrich z.B.: CBC-Schraube nach SANDHAUS

3.) Wurzelartige Implantate z.B.: Tübinger Implantat

4.) Extensionsimplantate z.B.: Blattimplantate nach LINKOW

z.B:: IMZ-Implantate nach KOCH

5.) Spirale nach FORMIGGINI oder ihre Abwandlungen nach CHERCHETE bzw. JEANNERET:

Als technische Aufgabe sollen beim vorliegendem Implantat die Vorteile einer Schraube (unkomplizierte Handhabung, sofortige Fixation nach Einsetzen) mit denen eines Extensionsimplantates (große Oberfläche allseitiges Durchwachsen mit ortsständigem Gewebe) verbunden werden.

Der Erfindungsgegenstand wird durch eine Zeichnungsfigur erläutert, deren oberer Teil eine Seitenansicht und deren unterer Teil eine Draufsicht darstellt. Der Unterteil (B) stellt eine verschraubbare 2-gängige Wendel mit deltoidförmigem Querschnitt (1) dar. Die Windungszahl (2) und Ganghöhe (3) ist je nach anatomischer Gegebenheit variabel. Als Oberteil (A) fungiert ein Zylinder mit konkaver Ausnehmung (4) zur Aufnahme des Schleimhautrandes und ein quaderförmiger Kopf (5) zum Ansetzen des Drehwerkzeuges.

Ein wesentliches Merkmal des Anmeldungsgegenstandes bedeutet der Umstand, daß an Stelle einer 1-gängigen Wendel eine 2-gängige Wendel eingesetzt wird. Denn eine 2-gängige Wendel gleicher Länge zeigt erheblich mehr Festigkeit bei Beanspruchung auf Torsion und benötigt weniger Umdrehungen beim Einschrauben als eine 1-gängige Wendel. Nach dem Setzen ist die 2-gängige Wendel fest fixiert und belastbar. Dadurch ist selbst unter Kaubelastung die für eine dauerhafte Verankerung so wichtige ungestörte allseitige kööcherne Durchwachsung möglich.

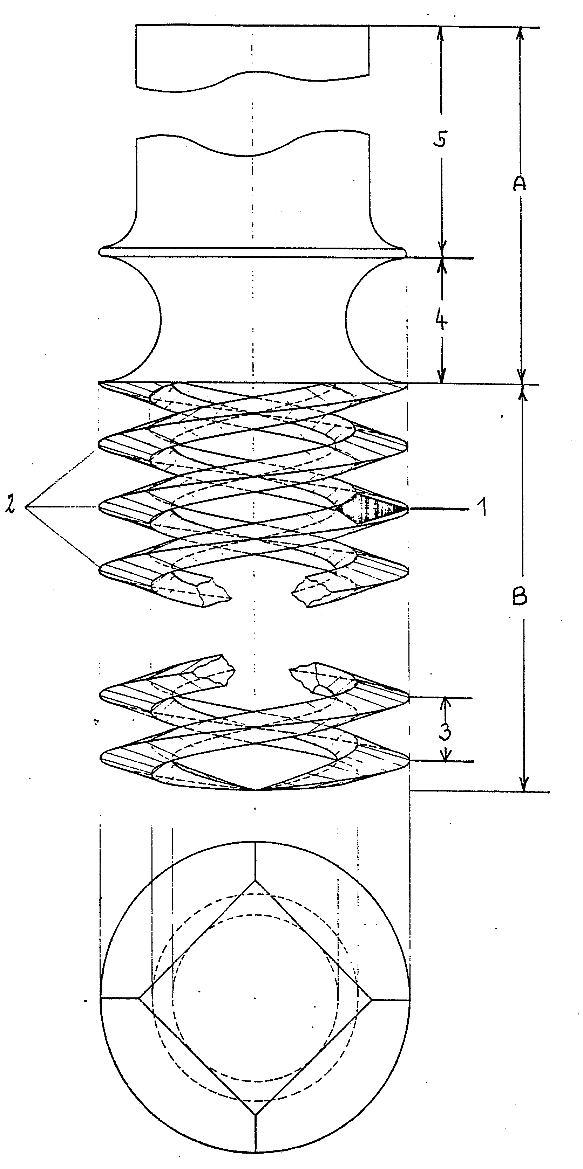

## Patentansprüche

Dentales Halbimplantat mit einem zur Verankerung im Kieferknochen dienenden verschraubbaren Unterteil dadurch gekennzeichnet, daß der verschraubbare Unterteil eine 2-gängige Wendel mit deltoidem Querschnitt (1) und je nach anatomischen Gegebenheiten variabler Windungszahl (2) und Ganghöhe (3) darstellt.

0263809

September 1986

Reutterer Friedrich